# EUROPÄISCHE PATENTSCHRIFT

(11) **EP 3 205 773 B1**
(45) Veröffentlichungstag und Bekanntmachung des Hinweises auf die Patenterteilung: **15.05.2024**
(21) Anmeldenummer: 16202024.2
(22) Anmeldetag: 02.12.2016
(51) Int. Cl.: G06Q 10/0631, E01C 23/088

(54) **STEUEREINRICHTUNG ZUM BETRIEB VON STRASSENFRÄSMASCHINEN**
CONTROLLER FOR OPERATING ROAD MILLING MACHINES
SYSTÈME DE COMMANDE POUR L'OPÉRATION DE FRAISEUSES ROUTIÈRES

(30) Priorität: 15.02.2016 DE 102016102568
(43) Veröffentlichungstag der Anmeldung: 16.08.2017
(73) Patentinhaber: Wirtgen GmbH, 53578 Windhagen (DE)
(72) Erfinder: Berning, Christian, 53909 Zülpich (DE); Hofrath, Sebastian, 53773 Hennef (DE); Barimani, Cyrus, 53639 Königswinter (DE); Hähn, Günter, 53639 Königswinter (DE)
(74) Vertreter: Herrmann, Jochen

(56) Entgegenhaltungen:
- EP-A1- 2 887 049
- EP-A1- 3 115 507

## Beschreibung

Zum Abtragen von Verkehrsflächen, beispielsweise von Straßen, Straßenabschnitten oder Parkplätzen, werden heute Straßenfräsmaschinen eingesetzt, mit welchen eine, mehrere oder alle Schichten einer Straße durch Fräsen abgetragen werden können. Die mit einer jeweiligen Straßenfräsmaschine erreichbare Fräsleistung, beispielsweise die je Zeiteinheit erreichbare Fräsfläche oder das je Zeiteinheit erreichbare Fräsvolumen, ist dabei stark von den Materialeigenschaften der zu bearbeitenden Verkehrsfläche abhängig. Ebenfalls wird der Verschleiß der Fräswerkzeuge unmittelbar von den Materialeigenschaften der Straße bzw. des Straßenabschnittes beeinflusst. Durch diese Abhängigkeiten wird die Planung des Maschineneinsatzes bei anstehenden Straßenfräsarbeiten erschwert. Das kann dazu führen, dass für eine Straßenfräsarbeit mehr Zeit-, Maschinen- oder Materialressourcen vorgesehen werden, als erforderlich, was zu erhöhten Kosten führt. Ebenfalls können die Ressourcen unzureichend eingeplant sein, was zu Verzögerungen führen kann. Letzteres macht sich insbesondere bei aufeinanderfolgend eingeplanten Fräsaufgaben negativ bemerkbar und kann zu hohen Folgekosten führen, wenn beispielsweise nachfolgende Bearbeitungsschritte nicht oder nur verspätet ausgeführt werden können.

Die Schrift DE 10 2013 112 972 A1 offenbart ein Verfahren zur Verschleißprognose für eine Bodenbearbeitungsmaschine, insbesondere eine Straßenfräsmaschine. Dabei wird der aktuelle Verschleißzustand eines Meißels oder eines Meißelhalters erfasst und aus dem aktuellen Verschleißzustand eine Restverschleißkapazität ermittelt. Aus dieser kann dann die verbleibende Arbeitsleistung, bis die Werkzeuge ihre Verschleißgrenze erreicht haben, beispielsweise in Form einer noch fräsbaren Masse oder eines Fräsvolumens oder einer verbleibenden Arbeitszeit, ermittelt werden. Bei der Bestimmung der verbleibenden Arbeitsleistung können die Materialeigenschaften des zu bearbeitenden Untergrunds mit berücksichtigt werden. Diese können beispielsweise durch Probeentnahmen oder an Hand von Maschinenparametern der Bodenbearbeitungsmaschine, welche sich beim Fräsen einstellen, abgeleitet werden.

Aus der US 2015/0197253 A1 ist ein System bekannt, welches beim Bearbeiten einer Bodenfläche, beispielsweise einer Straße, mit einer Bodenbearbeitungsmaschine die Qualität eines Arbeitsschrittes ortsaufgelöst ermittelt und grafisch darstellt. Die Qualität eines bearbeiteten Straßenabschnittes kann durch geeignete Sensoren an der Straßenbaumaschine und dem Vergleich mit Vorgabewerten ermittelt und bewertet werden. Die ortsaufgelöste grafische Darstellung ermöglicht es einer Bedienperson der Straßenbaumaschine, einzelne Straßenabschnitte gezielt nachzubearbeiten. Ein Qualitätsmerkmal können beispielsweise durch "Sprünge" der Bodenbearbeitungsmaschine verursachte Bodenunebenheiten darstellen.

Die EP 2 887 049 A1 betrifft ein Verschleißprognoseverfahren, bzw. ein Wartungsverfahren für eine Bodenbearbeitungsmaschine. Dabei ist es vorgesehen, dass der aktuelle Verschleißzustand eines oder mehrerer Bodenbearbeitungswerkzeuge erfasst wird. Aus dem aktuellen Verschleißzustand wird dann die Restverschleißkapazität, bis zum Erreichen der Verschleißgrenze ermittelt. Wartungsintervalle können optimiert werden.

Es ist Aufgabe der Erfindung, eine Steuereinrichtung bereitzustellen, welches einen optimierten Einsatz von Straßenfräsmaschinen und der erforderlichen Ressourcen zur Durchführung von Straßenfräsarbeiten ermöglicht.

Die Aufgabe der Erfindung wird durch eine Steuereinrichtung gemäß Anspruch 1 gelöst.

Im Sinne der Erfindung fallen unter die Begriffe Straße bzw. Straßenabschnitt jegliche Formen von befestigten Verkehrswegen und Verkehrsflächen, also auch Parkplätze, Bürgersteige, Radwege oder ähnliches.

Die erreichbare Fräsleistung einer Straßenfräsmaschine ist bei geeignet gewählten Maschinenparametern der Straßenfräsmaschine im Wesentlichen durch die Materialeigenschaften der abzutragenden Straße oder des abzutragenden Straßenabschnitts gegeben. Somit kann bei bekannten Materialeigenschaften der Straße oder des Straßenabschnitts bzw. bei bekannten Kennwerten, welche mit diesen Materialeigenschaften korrelieren, eine Vorhersage für die erreichbare Fräsleistung getroffen werden. Diese Vorhersage ist für geeignet gewählte Maschinenparameter gültig. Ist die Fräsleistung bekannt, kann eine exakte Planung von anstehenden Fräsaufgaben erfolgen. Dabei kann insbesondere die Abfolge verschiedener Fräsabschnitte innerhalb einer Baustelle oder die Abfolge verschiedener Straßenfräsarbeiten an verschiedenen Baustellen optimiert vorgegeben werden. Die Optimierung kann dabei vorzugsweise bezüglich einer erforderlichen Arbeitszeit und/oder der benötigten Ressourcen erfolgen. Weiterhin ist es möglich, den Einsatz mehrerer Straßenfräsmaschinen aufeinander abzustimmen.

Das Steuereinrichtung ermöglicht so einen optimierten Betrieb einer oder mehrerer Straßenfräsmaschinen bezüglich ihrer Arbeitsleistung sowie der zu ihrem Betrieb erforderlichen Ressourcen. Dadurch können die Gesamtkosten insbesondere zur Durchführung mehrerer aufeinanderfolgender Fräsaufgaben deutlich reduziert werden.

Die Steuereinrichtung ermöglicht vorzugsweise die Durchführung der in den nächsten Absätzen beschriebenen Verfahrensschritte.

Es kann vorgesehen sein, dass für die Durchführung einer vorgegebenen Straßenfräsarbeit eine Arbeitsdauer und/oder ein Betriebsstoffverbrauch und/oder einem Verschleiß zumindest eines Werkzeuges der Straßenfräsmaschine und/oder eine Menge erforderlicher Verschleißteile und/oder eine Menge erforderlicher Betriebsstoffe und/oder eine Menge erforderlicher Betriebshilfsstoffe an Hand der einer zu bearbeitenden Straße oder einem zu bearbeitenden Straßenabschnitt zugeordneten Materialeigenschaften und/oder Kennwerte bestimmt und angezeigt wird und/oder bei der Ermittlung der Abfolge der durchzuführenden Straßenfräsarbeiten berücksichtigt wird. Insbesondere bei bekannter Arbeitsdauer können zwei oder mehrere durchzuführende Fräsarbeiten in ihrem Ablauf optimal aufeinander abgestimmt werden. Weiterhin kann der gleichzeitige Einsatz mehrerer Straßenfräsmaschinen koordiniert werden. Kostenintensive Stillstands- und Wartezeiten der Straßenfräsmaschinen können so weitestgehend vermieden werden. Ist der Verschleiß der Fräswerkzeuge bekannt, so können anstehende Fräsaufgaben derart eingeplant werden, dass beispielsweise erforderliche Werkzeugwechsel bei ohnehin erforderlichen Stillstandzeiten der Straßenfräsmaschine, beispielsweise nach Abschluss einer Fräsaufgabe, anliegen.

Unabhängig von dem gewählten Verfahren zur Bestimmung der mit den Materialeigenschaften korrelierenden Kennwerte kann es vorgesehen sein, dass aus den Kennwerten die Materialeigenschaften für eine Straße oder einen Straßenabschnitt bestimmt werden. Anhand der Materialeigenschaften kann dann für eine beliebige Straßenfräsmaschine eine auf deren Eigenschaften hin abgestimmte Vorhersage für die Fräsleistung, den Verschleiß der Fräswerkzeuge bzw. den erforderlichen Material- und Ressourcenbedarf erfolgen.

Die Fräsleistung einer Straßenfräsmaschine, der Verschleiß ihrer Fräswerkzeuge bzw. die erforderlichen Material- und Betriebsmittelressourcen können beispielsweise dann mit ausreichender Genauigkeit vorhergesagt werden, wenn als Materialeigenschaft eine Abrasivität und/oder eine Härte und/oder ein Materialtyp und/oder eine Materialzusammensetzung und/oder eine Temperatur und/oder ein Schichtaufbau der Straße oder des Straßenabschnittes bestimmt wird.

Die Fräsleistung der Straßenfräsmaschine, der Verschleiß ihrer Fräswerkzeuge bzw. die erforderlichen Material- und Betriebsmittelressourcen können weiterhin dadurch genau vorhergesagt werden, dass als mit den Materialeigenschaften korrelierender Kennwert zumindest ein sich für die Durchführung einer zu planenden Fräsaufgabe ergebender Maschinenparameter einer Straßenfräsmaschine bestimmt wird.

Zur Bestimmung der Materialeigenschaften kann es beispielsweise vorgesehen sein, dass während eines ersten Fräsprozesses, der innerhalb eines zu bearbeitenden Arbeitsgebietes durchgeführt wird, als Maschinenparameter eine Frästiefe und/oder ein Vorschub der Straßenfräsmaschine und/oder eine Fräswalzendrehzahl einer Fräswalze der Straßenfräsmaschine und/oder ein auf die Fräswalze übertragenes Drehmoment und/oder eine auf die Fräswalze übertragene Antriebsleistung oder ein Betriebsstoffverbrauch bestimmt wird. Beispielsweise wird sich bei einer vorgegebenen Frästiefe, einem vorgegebenen Vorschub und einer vorgegebenen Fräswalzendrehzahl in Abhängigkeit von den vorliegenden Materialeigenschaften der zu fräsenden Straße bzw. des zu fräsenden Straßenabschnitts ein erforderliches, auf die Fräswalze zu übertragendes Drehmoment ergeben. Für eine härtere Straße wird dabei ein höheres Drehmoment notwendig sein als für eine weichere Straße. Anhand der eingestellten und sich ergebenden Maschinenparameter bzw. der Kombination dieser Maschinenparameter kann so auf die Materialeigenschaften der Straße bzw. des Straßenabschnitts geschlossen werden. Die Maschinenparameter bzw. die daraus abgeleiteten Materialeigenschaften können beispielsweise während eines ersten Fräsprozesses an einer Straße bzw. einem Straßenabschnitt ermittelt werden. Anhand der so gewonnenen Materialeigenschaften bzw. der Maschinenparameter als mit den Materialeigenschaften korrelierenden Kenngrößen kann dann eine Vorhersage für die Fräsleistung, den Verschleiß der Fräswerkzeuge bzw. den erforderlichen Material- und Ressourceneinsatz für einen weiteren Fräseinsatz in dem Arbeitsgebiet, innerhalb dem von den gleichen oder von ähnlichen Materialeigenschaften ausgegangen werden kann wie in dem bereits gefrästen Abschnitt, erstellt werden. So ist es beispielsweise üblich, dass bei einer mehrspurigen Fahrbahn zunächst eine Spur abgefräst wird und die weiteren Spuren später bearbeitet werden. Für die noch zu bearbeitenden Spuren kann von den gleichen Materialeigenschaften ausgegangen werden, wie sie anhand der Maschinenparameter beim Fräsen der bereits bearbeiteten Spur ermittelt wurden. Für den Planungsprozess der Arbeiten an den verbleibenden Spuren können so die zuvor ermittelten Maschinenparameter bzw. die daraus abgeleiteten Materialeigenschaften verwendet werden.

Die Genauigkeit bei der Bestimmung der Materialeigenschaften aus den Maschinenparametern einer Straßenfräsmaschine bei einem zuvor durchgeführten Fräsvorgang, in dem zu planenden Arbeitsgebiet kann dadurch verbessert werden, dass bei der Bestimmung der Materialeigenschaften aus den Maschinenparametern ein beim Fräsen einer bestimmten Fläche aufgetretener Verschleiß zumindest eines Werkzeugs der Straßenfräsmaschine berücksichtigt wird. Aus einer gemeinsamen Bewertung der Maschinenparameter und des Verschleißes kann mit hoher Genauigkeit auf die Materialeigenschaften des bearbeiteten Untergrunds geschlossen werden.

Gemäß einer Ausführungsvariante der Erfindung kann es vorgesehen sein, dass Positionsdaten einer Straßenfräsmaschine erfasst und den bestimmten Materialeigenschaften und/oder Kennwerten zugeordnet werden. Beispielsweise können während eines Fräsprozesses an einem Strassenabschnitt die Materialeigenschaften bzw. die Kennwerte den zugehörigen Positionsdaten eindeutig und beispielsweise automatisiert zugeordnet werden. Die so gewonnenen Materialeigenschaften bzw. Kennwerte können dann für die weitere Baustellenplanung in dem jeweiligen Arbeitsgebiet verwendet werden. Während eines Planungsprozesses können an Hand der Positionsdaten der Straßenfräsmaschine die zugehörigen Materialeigenschaften bzw. Kennwerte für die Straße bzw. den Straßenabschnitt, auf dem die Straßenfräsmaschine bereits gearbeitet hat, abgerufen werden. Die Vorhersage der Fräsleistung, des Verschleißes bzw. des Material- und Ressourcenbedarfs kann dann an Hand dieser Materialeigenschaften bzw. Kennwerte erfolgen. Ein solches Vorgehen ist beispielsweise bei einem dezentral angeordneten Planungssystem vorteilhaft, bei dem die Planung einer durchzuführenden Fräsarbeit unmittelbar vor Ort auf zumindest einer der vorgesehenen Straßenfräsmaschinen erfolgt.

Es ist weiterhin denkbar, dass die Materialeigenschaften und/oder die mit den Materialeigenschaften korrelierenden Kennwerte aus dem Einbauprozess der Straße oder des Straßenabschnitts bestimmt werden. Anhand der beim Einbau der Straße oder des Straßenabschnitts verwendeten Maschinen, Materialien und Prozessparameter können die für einen späteren Fräsprozess benötigten Materialeigenschaften ortsaufgelöst bzw. für ein vorgegebenes Arbeitsgebiet ermittelt und abgespeichert werden. Bei einem späteren Abtragen der Straße bzw. des Straßenabschnitts mittels Fräsen kann dann auf diese oder daraus abgeleitete Materialeigenschaften zurückgegriffen werden. Besonders vorteilhaft ist hierbei, dass vor der Planung einer durchzuführenden Fräsarbeit keine gesonderte Bestimmung der Materialeigenschaften einer zu bearbeitenden Straße bzw. eines zu bearbeitenden Straßenabschnitts erfolgen muss.

Entsprechend einer möglichen Ausgestaltungsvariante der Erfindung kann es vorgesehen sein, dass als mit den Materialeigenschaften korrelierende Kennwerte mit einem Messsystem ermittelte Messdaten bestimmt werden. Das Messsystem kann beispielsweise die Härte einer Straßenoberfläche oder den Schichtaufbau einer Straße bestimmen. Ebenfalls ist es denkbar, geeignete Messung an Bohrkernen von zuvor durchgeführten Probebohrungen durchzuführen. Die Messdaten können dann der zugehörigen Straße, dem zugehörigen Straßenabschnitt oder einem zugehörigen Gebiet zugeordnet werden. Die Messdaten können direkt die benötigten Materialeigenschaften darstellen oder die Materialeigenschaften können aus den Messdaten ermittelt werden.

Entsprechend einer besonders bevorzugten Ausführungsvariante der Erfindung kann es vorgesehen sein, dass bei der Vorgabe der Abfolge der Straßenfräsarbeiten Transportzeiten der Straßenfräsmaschine zwischen den zu bearbeitenden Straßen und/oder Straßenabschnitten und/oder Wartungsintervalle der Straßenfräsmaschine berücksichtigt werden. Durch diese Maßnahme können Stillstandzeiten der Straßenfräsmaschine vermieden oder zumindest reduziert werden, wodurch die Gesamtkosten für die durchzuführenden Fräsarbeiten gesenkt werden können.

Eine optimierte Baustellenplanung kann dadurch erreicht werden, dass als Fräsleistung eine gefräste Fläche und/oder ein Fräsvolumen und/oder eine Fräsmasse und/oder eine Frässtrecke jeweils bezogen auf eine Zeiteinheit bestimmt wird. Bei der Planung eines Fräsvorhabens ist die erforderliche Arbeitsmenge, beispielsweise in Form einer zu fräsenden Fläche, eines zu fräsenden Volumens, einer zu fräsenden Masse oder eine zu fräsenden Strecke, bekannt. Ist anhand der Materialeigenschaften der Straße oder des Straßenabschnitts die Fräsleistung ermittelt, so kann anhand der Arbeitsmenge und der Fräsleistung beispielsweise die erforderliche Zeitdauer zur Durchführung des Fräsvorhabens bestimmt werden. Dabei können erforderliche Stillstandzeiten der Straßenfräsmaschine berücksichtigt werden. Bei einem bekannten Verschleiß, beispielsweise bezogen auf eine Arbeitsmenge oder eine Einsatzzeit, der Fräswerkzeuge können beispielsweise notwendige Stillstandzeiten der Straßenfräsmaschine zum Austausch der Fräswerkzeuge vorhergesagt und entsprechend berücksichtigt werden. Die Abfolge nacheinander durchzuführender Fräsarbeiten, auch mit mehreren Straßenfräsmaschinen, kann so optimal aufeinander abgestimmt werden. Denkbar ist es, auch die Arbeitsmenge zur Bearbeitung einer Straße bzw. eines Straßenabschnitts im Rahmen des Verfahrens zu erfassen und zu speichern, sodass während der Planungsphase darauf zurückgegriffen werden kann. Die Arbeitsmenge kann beispielsweise bereits während des Einbaus einer Straße oder eines Straßenabschnitts erfasst und gespeichert werden.

Die Erfindung wird im Folgenden anhand eines in den Zeichnungen dargestellten Ausführungsbeispieles näher erläutert.

Es zeigen:
- Fig. 1: in schematischer Darstellung und Seitenansicht eine Straßenfräsmaschine,
- Fig. 2: in einer vereinfachten schematischen Darstellung einen beispielhaften Aufbau einer Straße,
- Fig. 3: in einer vereinfachten Blockdarstellung ein Planungssystem zur Planung von Straßenfräsarbeiten,
- Fig. 4: in einer Blockdarstellung einzelne Verfahrensschritte während einer Planungsphase und
- Fig. 5: in einer Blockdarstellung einzelne Verfahrensschritte während einer Phase der Datenerfassung.

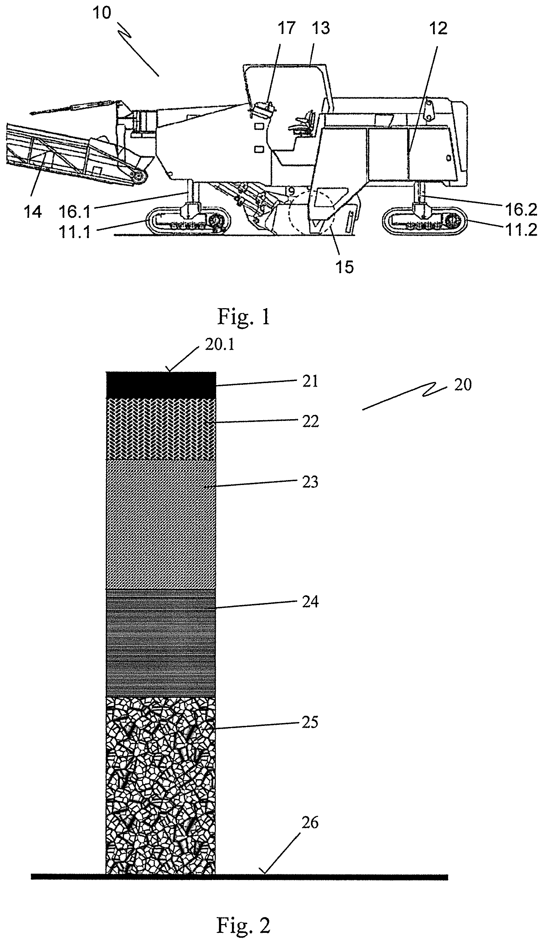

Figur 1 zeigt in schematischer Darstellung und Seitenansicht eine Straßenfräsmaschine 10. Ein Maschinenrahmen 12 ist über vier Hubsäulen 16.1, 16.2 höhenverstellbar von Fahrwerken 11.1, 11.2, beispielsweise Kettenlaufwerken oder Rädern, getragen. Die Straßenfräsmaschine 10 kann, ausgehend von einem Leitstand 13, über eine in dem Leitstand 13 angeordnete Steuerung 17 bedient werden. In einem verdeckt angeordneten Fräswalzenkasten ist eine ebenfalls verdeckt angeordnete und in der Darstellung gestrichelt gezeichnete Fräswalze 15 drehbar gelagert. Eine Fördereinrichtung 14 dient dem Abtransport des Fräsgutes.

Im Einsatz wird die Straßenfräsmaschine 10 mit einer über die Steuerung 17 eingegebenen Vorschubgeschwindigkeit über den zu bearbeitenden Untergrund bewegt. Dabei tragen auf der sich drehenden Fräswalze 15 angeordnete, nicht dargestellte Fräswerkzeuge die in Figur 2 in ihrem Aufbau gezeigte Straße 20 ab. Die Fräswerkzeuge sind in der Regel als Meißel, vorzugsweise Rundschaftmeißel ausgebildet, die auswechselbar in Meißelhaltern montiert sind. Bekannt, und im Rahmen der Erfindung verwendbar sind insbesondere Meißelhalterwechselsysteme, bei denen die Meißelhalter auswechselbar in Basisteilen befestigt sind. Die Basisteile sind dabei auf der Oberfläche der Fräswalze befestigt, beispielsweise dort angeschweißt. Die Anordnung der Fräswerkzeuge und der Meißelhalter kann dabei so getroffen sein, dass sich auf der Oberfläche der Fräswalze eine oder mehrere Schneidwendeln ergeben. Mit den Schneidwendeln ergibt sich ein sukzessiverer Schneideingriff der Fräswerkzeugen. Die Schneidwendeln können darüber hinaus auch eine Räum- und Ladefunktion übernehmen, wobei das abgetragene Fräsmaterial entlang der Oberfläche der Fräswalze 15 zu einer Auswerfposition transportiert wird. Die Fräswalze 15 wird von einem Motor über eine Antriebseinheit angetrieben. Die Höhenposition sowie die Drehzahl der Fräswalze 15 können von der Steuerung 17 aus eingestellt werden. Über die Höhenposition der Fräswalze 15 wird die Frästiefe eingestellt. Die Höhenposition der Fräswalze 15 relativ zu der zu bearbeitenden Oberfläche kann dabei je nach Maschinentyp über die höhenverstellbaren Hubsäulen 16.1, 16.2 oder über eine gesonderte Höhenverstellung relativ zum Maschinenrahmen eingestellt werden. Aus der Vorschubgeschwindigkeit und der Frästiefe ergibt sich letztendlich die Arbeitsleistung der Straßenfräsmaschine 10, also beispielsweise eine pro Zeiteinheit abgetragene Strecke oder Fläche oder Masse bzw. ein abgetragenes Volumen.

Die mit einer Straßenfräsmaschine 10 erreichbare Arbeitsleistung sowie der Verschleiß der Fräswerkzeuge sind stark von den Materialeigenschaften der abzutragenden Straße 20 abhängig, beispielsweise von deren Härte oder Abrasivität. Dies erschwert die Baustellenplanung bezüglich der erreichbaren Fräsleistung und somit der benötigten Arbeitszeit sowie dem zu erwartenden Verschleiß der Fräswerkzeuge. Nacheinander durchzuführende Fräsarbeiten können so nur unzureichend aufeinander abgestimmt werden, was zu Verzögerung oder zu unerwünschten Stillstandzeiten der Straßenfräsmaschine 10 führt. Ebenfalls kann die Menge der für den Betrieb der Straßenfräsmaschine 10 benötigten Materialien, beispielsweise von Verschleißteilen, Betriebsstoffen oder Betriebshilfsstoffen, nur ungenügend genau vorhergesagt werden. Dies kann im einen Fall dazu führen, dass zu viel der Materialien an eine Baustelle geliefert wird, was mit entsprechend erhöhten Kosten verbunden ist. Im anderen Fall kann es aufgrund nicht ausreichend vorliegender Materialien zu unerwünschten Verzögerungen kommen.

Figur 2 zeigt in einer vereinfachten schematischen Darstellung einen beispielhaften Aufbau einer Straße 20. Ausgehend von einem Planum 26 sind eine Frostschutzschicht 25 und eine Schottertragschicht 24 vorgesehen. Darauf aufbauend folgen eine Asphalttragschicht 23, eine Binderschicht 22 und eine Deckschicht 21, welche die Straßenoberfläche 20.1 ausbildet. In Abhängigkeit von der auszuführenden Fräsarbeit werden eine oder mehrere dieser Schichten mit Hilfe der Straßenfräsmaschine 10 abgetragen.

Die bezüglich des Fräsens relevanten Materialeigenschaften der Straße 20 ergeben sich aus den verwendeten Materialien, den Bedingungen und Prozessparametern beim Einbau der Straße 20 sowie den Dicken der einzelnen Schichten. Dabei können die Materialeigenschaften auch von vorherrschenden Umgebungsbedingungen, beispielsweise der Umgebungstemperatur, abhängen. Relevante Materialeigenschaft können eine Abrasivität oder eine Härte der Straße 20 sein. Diese sind beispielsweise durch den Materialtyp, eine Materialzusammensetzung, eine Temperatur und/oder einen Schichtaufbau der Straße 20 bestimmt.

Die Materialeigenschaften eines Straßenaufbaus sind üblicherweise über einen größeren Bereich gleichbleibend. So können beim Einbau einer neuen Fahrbahnoberfläche möglichst gleichwertige Asphaltmischungen verwendet werden. Vorteilhaft erfolgt der Einbau in einem Arbeitsgang, wie dies beispielsweise bei OPA (offenporiger Asphalt oder " Flüsterasphalt") zwingend erforderlich ist. Daher weist ein Straßenaufbau innerhalb bestimmter Gebiete, beispielsweise innerhalb eines Autobahnabschnittes oder innerhalb eines durch geographische Koordinaten festgelegten Bereichs, zumeist relativ konstante Materialeigenschaften auf. Es ist somit möglich, einem Ort bzw. einem räumlich begrenzten Gebiet Materialeigenschaften zuzuordnen. Der Ort bzw. das Gebiet kann dabei vorzugsweise durch eine Straßenbezeichnung, eine Bezeichnung eines Straßenabschnittes oder durch geographische Koordinaten festgelegt sein. Sind die Materialeigenschaften für eine Straße 20 bekannt, so kann erfindungsgemäß für künftige Fräsarbeiten an der Straße 20 eine Prognose erstellt werden, welche Arbeitsleistungen von einer Straßenfräsmaschine 10 und/oder welcher Verschleiß der Fräswerkzeuge zu erwarten ist. Diese Werte können bei der Planung einer künftigen Baustelle bzw. Baustellen berücksichtigt werden. So ist es möglich, aus der erwarteten Arbeitsleistung die erforderliche Zeit zur Durchführung einer Fräsaufgabe zu ermitteln. Bei bekanntem Verschleiß der Fräswerkzeuge können die hierzu erforderlichen Ersatzteile bestimmt werden. Ebenfalls können die benötigten Betriebs- und Hilfsstoffe ermittelt werden. Bei Kenntnis dieser Daten kann erfindungsgemäß eine Abfolge verschiedener durchzuführender Fräsarbeiten derart optimiert ermittelt und vorgegeben werden, dass sich ein möglichst geringer Gesamtaufwand bezüglich des Zeit- und Materialaufwands ergibt. Dabei werden vorzugsweise auch Transportzeiten der Straßenfräsmaschine zwischen verschiedenen Baustellen berücksichtigt. Ebenfalls vorteilhaft können erforderliche Stillstandzeiten der Straßenfräsmaschine 10, beispielsweise für durchzuführende Wartungsarbeiten, bei der Baustellenplanung mit einbezogen werden. Es wird so eine optimierte Einsatzplanung für eine oder mehrere Straßenfräsmaschinen 10 ermöglicht.

Durch eine derart optimierte Einsatzplanung können die Gesamtkosten für die durchzuführenden Fräsarbeiten aufgrund von reduzierten Stillstandzeiten der Straßenfräsmaschine 10 bzw. Straßenfräsmaschinen 10 sowie verringerten Material-, Lager- und Transportkosten deutlich reduziert werden.

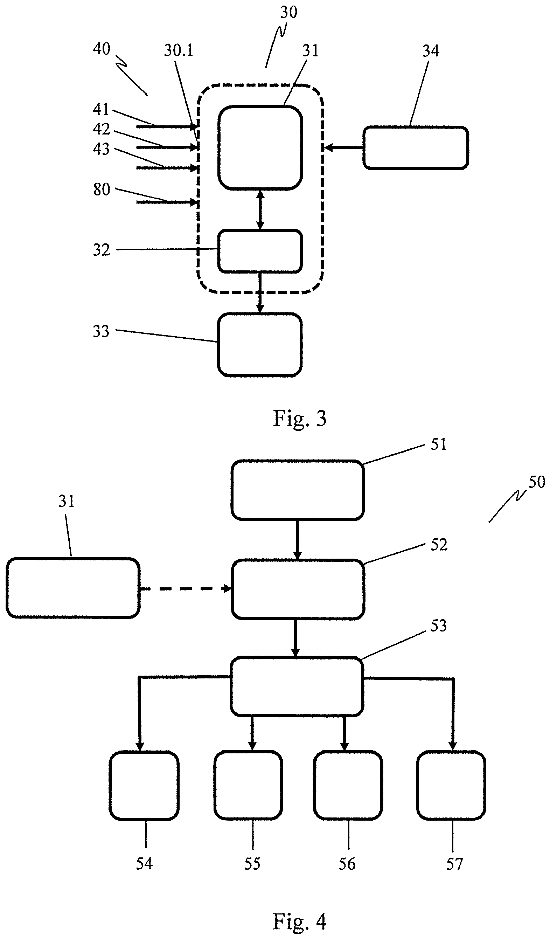

Figur 3 zeigt in einer vereinfachten Blockdarstellung ein Planungssystem 30 zur Planung von Straßenfräsarbeiten in einer möglichen Ausführungsvariante. Dem Planungssystem 30 sind ein elektronischer Speicher 31 und eine mit dem Speicher 31 verbundene Recheneinheit 32 zugeordnet. Ebenfalls sind eine Eingabeeinheit 34 und eine Ausgabeeinheit 33 mit dem Planungssystem 30 verbunden. Zur Übertragung beispielsweise von mit den Materialeigenschaften einer Straße 20 korrelierenden Kennwerten 40 weist das Planungssystem 30 eine Schnittstelle 30.1 auf. Die Schnittstelle 30.1 ist im vorliegenden Fall als Funkschnittstelle ausgelegt. Sie kann jedoch auch als kabelgebundene Schnittstelle, beispielsweise in Form einer USB-Schnittstelle, ausgeführt sein oder es können verschiedene Arten von Schnittstellen 30.1 vorgesehen sein. Über die Schnittstelle 30.1 können Einbaudaten 41 vom Einbauprozess einer Straße 20, Mess- und Versuchsdaten 42 zur Ermittlung von Materialeigenschaften einer Straße 20 und/oder Fräsdaten 43 einer Straßenfräsmaschine 10 beim Abtrag einer Straße 20 in das Planungssystem 30 als mit den Materialeigenschaften korrelierende Kennwerte 40 eingelesen werden. Ebenso können Positionsdaten 80 oder direkt die Materialeigenschaften einer Straße 20 über die Schnittstelle 30.1 auf das Planungssystem 20 übertragen werden.

Vorzugsweise können auch weitere Daten über die Schnittstelle 30.1 auf das Planungssystem 30 übertragen oder, ausgehend von dem Planungssystem 20, ausgegeben werden. Alternativ dazu können die genannten Daten oder Teile der Daten (z.B. Materialeigenschaften, Kennwerte 40, Positionsdaten 80) auch über die Eingabeeinheit 34 in das Planungssystem 30 eingegeben bzw. über die Ausgabeeinheit 33 ausgegeben werden. Die Daten werden in dem elektronischen Speicher 31 gespeichert und beispielsweise über ein Datenbanksystem verwaltet. Dabei werden den Materialeigenschaften und/oder den Kennwerten 40 die zugehörigen Positionswerte 80 zugeordnet. Die Angabe der Positionswerte 80 erfolgt vorzugsweise in Form von räumlich begrenzten geographischen Koordinaten oder von Straßenbezeichnungen oder von Bezeichnungen von Straßenabschnitten, also als definierte und räumlich begrenzte Arbeitsgebiete. Die Materialeigenschaften oder die damit korrelierenden Kennwerte können gleichzeitig oder zeitlich versetzt zu den zugehörigen Positionswerten 80 eingespeichert werden.

Die Recheneinheit 32 kann dazu ausgebildet sein, aus den Einbau- 41, Mess- 42 und/oder Fräsdaten 43 die Kennwerte 40 oder direkt die Materialeigenschaften zu ermitteln.

Vorzugsweise werden die Materialeigenschaften einer Straße 20 bereits beim Einbauprozess der Straße als Einbaudaten (41) erfasst. Beim Einbauprozess sind der Schichtaufbau und die Materialzusammensetzung bekannt, woraus auf die Materialeigenschaften geschlossen werden kann.

Straßenfräsmaschinen 10 können nur einen Teil einer Straßenoberfläche abtragen, beispielsweise eine einzelne Fahrspur auf eine Autobahn. Sie Fräsen dabei unter Umständen auch nicht die gesamte Länge der zu bearbeitenden Fläche in einem Arbeitsgang. Daher kann es vorkommen, dass zu einem ersten Zeitpunkt zunächst ein Teil einer bestehenden Fahrbahn abgetragen und erst zu einem späteren Zeitpunkt die Arbeit an dieser Stelle fortgesetzt wird. Während der zu dem ersten Zeitpunkt durchgeführten Fräsarbeiten können die Materialeigenschaften der Straße 20 manuell oder automatisch ermittelt werden. Beispielsweise können die Materialeigenschaften aus während des Fräsprozesses ermittelt Fräsdaten 43, beispielsweise den Maschinenparametern 74 der Straßenfräsmaschine 10 abgeleitet werden. Die so ermittelten Materialeigenschaften können dann für die Planung der verbleibenden Fräsarbeiten verwendet werden. Die Prognose, beispielsweise für die künftige Fräsleistung oder den erwarteten Verschleiß, erfolgt innerhalb eines begrenzten Arbeitsgebietes, in dem von gleichbleibenden Materialeigenschaften der zu fräsenden Straße 20 bzw. Straßen 20 oder Straßenabschnitten ausgegangen wird.

Die Arbeitsgebiete können vorteilhaft beschreibend festgelegt und aufgerufen werden. Vorzugsweise sind dazu Straßenbezeichnung oder eine Bezeichnung eines Straßenabschnittes verwendet, beispielsweise eine Autobahnbezeichnung innerhalb eines durch eine Kilometerangabe begrenzten Bereichs.

Während der Erfassung der Materialeigenschaften oder der damit korrelierenden Kennwerte 40 kann ein Bediener manuell das zugehörige Arbeitsgebiet erfassen und in dem Planungssystem 30 hinterlegen. Alternativ dazu kann eine Maschinenposition, beispielsweise einer Straßenbaumaschine beim Einbau einer Straße 20 oder einer Straßenfräsmaschine 10 beim Ausbau einer Straße, zusammen mit den dabei gewonnenen Materialeigenschaften oder Kennwerten 40 erfasst werden. Ein Bediener kann dann um die Maschinenposition ein Arbeitsgebiet festlegen und eingeben, für das die Materialeigenschaften oder die Kennwerte zutreffend sind. Beim Einbauprozess können vorteilhaft die genauen Positionsdaten des eingebauten Materials und/oder der zugehörigen Prozessparameter erfasst und ortsaufgelöst gespeichert werden. Dabei können auch hier die Positionsdaten manuell oder automatisch erfasst und auf das Planungssystem 30 übertragen werden.

Das Planungssystem 30 oder Teile des Planungssystems 30 sind vorteilhaft zentral angeordnet. Auf diese Weise kann das Planungssystem 30 von verschiedenen Benutzern und/oder zur Planung verschiedener Baustellen verwendet werden. Vorteilhaft ist ein zentral angeordnetes Planungssystem 30 mit dezentral vorgesehenen Ein- und Ausgabeeinheiten 34, 33 vernetzt. Von diesen kann auf das Planungssystem 30 zugegriffen und die jeweilige Datenerfassung (Materialeigenschaften, Kennwerte 40, Arbeitsgebiete) oder die Baustellenplanung durchgeführt werden. Ein- und Ausgabeeinheiten 34, 33 können dazu beispielsweise an entsprechenden Straßenfräsmaschinen 10 angeordnet sein. Möglich ist es auch, dass lediglich der Speicher 31 und ggf. eine Datenbankfunktion zentral angeordnet sind und Recheneinheiten 32 sowie Ein- und Ausgabeeinheiten 33, 34 dezentral vorgesehen sind. Vorteilhaft bei der zentralen oder zum Teil zentralen Anordnung des Planungssystems 30 ist es, dass der aktuelle Datenbestand für alle Nutzer des Planungssystems 30 gleichermaßen vorliegt. Alternativ dazu kann es vorgesehen sein, dass das Planungssystem 30 dezentral, beispielsweise auf den jeweiligen Straßenfräsmaschinen 10, angeordnet ist. Vorteilhaft sind die dezentral angeordneten Planungssysteme 30 miteinander vernetzt oder vernetzbar, so dass die in dem Speicher 31 hinterlegten Daten ausgetauscht werden können.

In dem Speicher 31 können für die einzelnen Arbeitsgebiete direkt die Materialeigenschaften gespeichert sein. Alternativ können jedoch auch unverarbeitete Daten aus dem Einbau-, einem Mess- und/oder einem Fräsprozess gespeichert sein. Die unverarbeiteten Daten bilden mit den Materialeigenschaften korrelierende Kennwerte 40. Aus diesen können vorzugsweise von der Recheneinheit 32 die jeweiligen Materialeigenschaften bestimmt und für den Planungsprozess verwendet werden. Alternativ ist es jedoch auch denkbar, dass die unverarbeiteten Daten (Kennwerte 40) direkt für den Planungsprozess verwendet werden. So können als Kennwerte 40 beispielsweise während eines Fräsprozesses ermittelte Maschinenparameter 74 oder die während eines Arbeitsprozesse erbracht Fräsleistung einer Straßenfräsmaschine 10 gespeichert werden. Diese Maschinenparameter 74 können dann für einen Planungsprozess in dem gleichen Arbeitsgebiet verwendet werden. Vorteilhaft müssen so nicht die Materialeigenschaften aus den Maschinenparametern 74 ermittelt werden. Die Maschinenparameter 74 werden vorzugsweise für Planungsprozesse für Straßenfräsmaschinen 10 des gleichen Typs wie die Straßenfräsmaschine 10, mit welcher die Maschinenparameter 74 ermittelt wurden, verwendet. Es ist jedoch auch ein Übertrag auf Straßenfräsmaschinen 10 eines anderen Typs denkbar, wobei hier die abweichenden Leistungsdaten der Straßenfräsmaschinen 10 berücksichtigt werden müssen.

Die örtliche Zuordnung der erfassten Materialeigenschaften bzw. Kennwerte 40 kann automatisch bei der Erfassung der Daten erfolgen, beispielsweise mit einem GPS-System. Alternativ dazu können die erfassten Materialeigenschaften bzw. Kennwerte 40 auch manuell bestimmten Arbeitsbereichen zugeordnet werden. Dies kann unmittelbar während der Erfassung oder zeitlich getrennt davon erfolgen. So ist es möglich, die Einbaudaten während des Einbaus einer Straße zu erfassen und zu speichern. Die Daten können dann, beispielsweise mittels Datenfernübertragung oder mittels eines mobilen Datenträgers, auf das Planungssystem 30 übertragen und in dem Speicher 31 gespeichert werden. Die Zuordnung des zugehörigen Arbeitsgebietes kann dann nachträglich an dem Planungssystem 30 durchgeführt werden.

Figur 4 zeigt in einer Blockdarstellung einzelne Verfahrensschritte während einer Planungsphase von durchzuführenden Straßenfräsarbeiten in Form eines Ablaufplans 50 in einer möglichen Ausführungsform. Dem Ablaufplan 50 sind aufeinanderfolgend ein erster Block 51, ein zweiter Block 52 und ein dritter Block 53 zugeordnet. Der dritte Block 53 ist mit einem vierten Block 54, einem fünften Block 55, einem sechsten Block 56 und einem siebten Block 57 verbunden.

Im ersten Block 51 erfolgt eine Auswahl des vorgesehenen Arbeitsortes. Dies kann beispielsweise über eine Eingabe eines Arbeitsgebietes mittels der in Figur 3 gezeigten Eingabeeinheit 34 in das Planungssystem 30 erfolgen. Das Arbeitsgebiet kann durch räumlich begrenzte geographische Koordinaten oder durch eine eindeutige Bezeichnung einer Straße 20 oder eines Straßenabschnitts gekennzeichnet sein. In dem zweiten Block 52 erfolgt die Abfrage der Materialeigenschaften für das Arbeitsgebiet aus dem Speicher 31. Zur Verwaltung der gespeicherten Daten weist das Planungssystem 30 dazu vorzugsweise eine geeignete Datenbank auf. An Hand dieser Materialeigenschaften erstellt das Planungssystem 30 im dritten Block 53 für das im ersten Block 51 vorgegebene Arbeitsgebiet eine Prognose für die erwarteten Arbeitsleistungen und benötigten Materialien. Dazu wird im gezeigten Ausführungsbeispiel im vierten Block 54 eine erwartete Fräsleistung ausgegeben. Bei der Fräsleistung kann sich beispielsweise um eine pro Zeiteinheit zu fräsenden Strecke oder Fläche handeln. Ebenso kann die Fräsleistung durch ein zu fräsendendes Volumen oder durch eine zu fräsende Masse angegeben sein. In dem gezeigten Ausführungsbeispiel wird anhand der Materialeigenschaften in dem fünften Block 55 auch ein erwarteter Verschleiß der Fräswerkzeuge ermittelt und angegeben. Der Verschleiß kann beispielsweise in Form einer Verschleißgeschwindigkeit, also beispielsweise in einer Änderung einer Meißellänge oder eines Meißelvolumens je Zeiteinheit, oder auch in Bezug auf eine durchgeführte Fräsarbeit angegeben werden. Letzteres wäre beispielsweise eine Änderung einer Meißellänge oder eines Meißelvolumens je gefräster Masse, je gefrästem Volumen oder je gefräster Strecke oder Fläche. Auch ist es denkbar, dass die Anzahl erforderlicher Werkzeugwechsel während der zu planenden Fräsarbeit vorhergesagt wird. Dadurch können vorteilhaft die erforderlichen Ersatzteile an einer Baustelle bereitgestellt werden. Vorzugsweise wird auch eine erwartete Arbeitsdauer für die Durchführung der Fräsaufgabe ermittelt, wie dies in dem sechsten Block 56 vorgesehen ist. Entsprechend dem siebten Block 57 ist es vorteilhaft vorgesehen, einen Betriebsstoffverbrauch der Straßenfräsmaschine 10 vorherzusagen. Durch Kenntnis dieser und gegebenenfalls weiterer zu erwartender Fräs- und Verbrauchsdaten kann eine optimierte Baustellenplanung erfolgen. Dies betrifft zum einen die Bereitstellung von benötigten Materialien, insbesondere von Ersatzteilen, Betriebsstoffen und Betriebshilfsstoffen. Zum anderen kann über die erwartete Arbeitsdauer und Fräsleistung eine optimierte zeitliche Einsatzplanung der Straßenfräsmaschine 10 oder mehrerer Straßenfräsmaschinen 10 erfolgen. Dies ist insbesondere bei der Planung aufeinanderfolgender Arbeiten an mehreren Arbeitsorten vorteilhaft, da so ein optimierter Baustellenablauf geplant und die Stillstandzeiten der Straßenfräsmaschine(n) 10 reduziert werden kann.

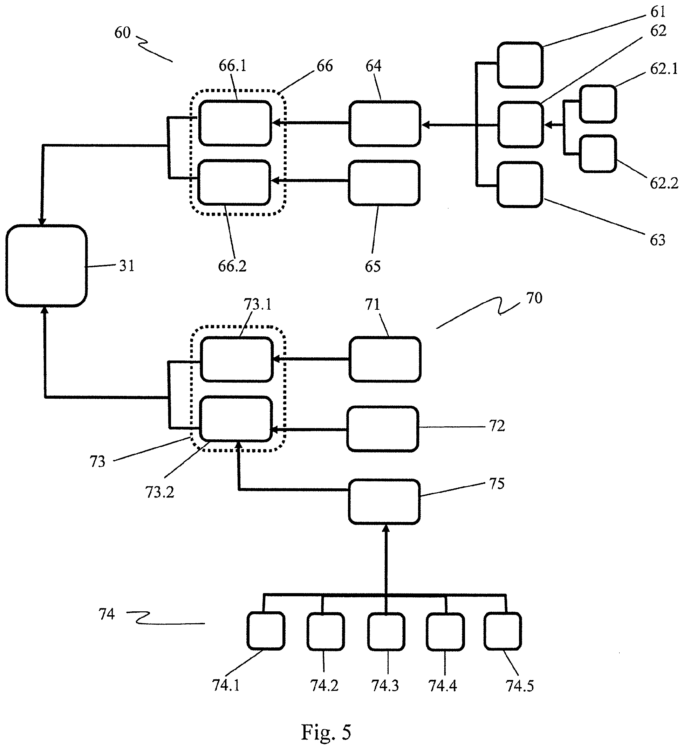

Figur 5 zeigt in einer Blockdarstellung einzelne Verfahrensschritte während einer Phase der Datenerfassung.

Ein Zweig Datenerfassung Einbauprozess 60 gibt die Ermittlung und Einspeicherung von Materialeigenschaften während des Einbauprozesses einer Straße 20 wieder. Ein Schichtaufbau 61, Mischguteigenschaften 62 und Verdichtungsdaten 63 werden einem Block Erfassung Einbaudaten 64 zugeführt. Bei der Angabe der Mischguteigenschaften 62 werden eine Temperatur 62.1 des Mischgutes sowie Mischgut-Materialeigenschaften 62.2 des Mischgutes selbst bzw. der Komponenten des Mischgutes berücksichtigt. Hierbei fließt vorzugsweise auch die Zusammensetzung des Mischgutes mit ein. In einem Block Erfassung Positionsdaten 65 werden die den Einbaudaten zugehörenden Positionsdaten erfasst. Die Daten aus dem Block Erfassung Einbaudaten 64 und dem Block Erfassung Positionsdaten 65 werden einem Block Zuordnung 66 und dort einem Block Materialeigenschaften 66.1 beziehungsweise einem Block Arbeitsgebiet 66.2 zugeführt. Anschließend werden die Daten zu dem Speicher 31 geleitet.

Zur Datenerfassung während des Einbauprozesses können der Schichtaufbau 61, die Mischguteigenschaften 62, die Verdichtungsdaten 63 sowie die zugehörigen Positionsdaten von der oder den verwendeten Straßenbaumaschinen bzw. deren Betreiber erfasst und manuell über die in Figur 3 gezeigte Eingabeeinheit 34 in das Planungssystem 30 eingegeben werden. Alternativ dazu kann es vorgesehen sein, dass die Daten direkt von den Straßenbaumaschinen über die in Figur 3 gezeigte Schnittstelle 30.1 in das Planungssystem 30 eingelesen werden. Die Positionsdaten werden dazu vorzugsweise durch ein an der Straßenbaumaschine angeordnetes System zur Positionserkennung, beispielsweise GPS, bereitgestellt. Denkbar ist es auch, dass ein Betreiber der Straßenbaumaschine deren aktuelle Position erfasst und eingibt. Die während des Einbaus zurückgelegte Strecke und gegebenenfalls auch die Einbaubreite werden elektronisch erfasst, wodurch Bereiche gleicher Materialeigenschaften sehr genau festgelegt werden können. Aus den Positionsdaten werden automatisiert durch das Planungssystem oder per Eingabe über die Eingabeeinheit 34 räumlich begrenzte Arbeitsgebiete gebildet, innerhalb derer die Materialeigenschaften der Straße 20 gleich sind. Aus den in dem Block Erfassung Einbaudaten 64 zusammengetragenen Einbaudaten der Straße 20 werden die relevanten Materialeigenschaften der Straße 20 ermittelt und in dem Block Zuordnung 66 den durch die Positionsdaten definierten Arbeitsgebieten zugeordnet. Die Arbeitsgebiete können dabei durch begrenzte geografische Koordinaten oder durch Bezeichnungen von Straßen oder Straßenabschnitten beschrieben sein. Die Ermittlung der Materialeigenschaften aus den Einbaudaten erfolgt vorzugsweise in der in Figur 3 gezeigten Recheneinheit 32. Die Arbeitsgebiete und die jeweils zugehörigen Materialeigenschaften werden anschließend in dem Speicher 31 gespeichert. Alternativ ist es möglich, dass die Einbaudaten den Arbeitsgebieten zugeordnet und in dem Speicher 31 gespeichert werden. Die Einbaudaten bilden dann mit den Materialeigenschaften der Straße 20 korrelierende Kennwerte 40.

Ein Zweig Datenerfassung Fräsen 70 zeigt in einer Ausführungsform die Möglichkeit auf, die erforderlichen Materialeigenschaften während eines Fräsprozesses zu ermitteln. Der Zweig Datenerfassung Fräsen 70 umfasst einen zweiten Block Erfassung Positionsdaten 71, einen Block manuelle Eingabe 72 und einen zweiten Block Zuordnung 73 mit einem zweiten Block Arbeitsgebiet 73.1 und einem zweiten Block Materialeigenschaften 73.2. Maschinenparameter 74 der Straßenfräsmaschine 10 werden einem Block Erfassung Fräsparameter 75 zugeführt und an den zweiten Block Materialeigenschaften 73.2 weitergeleitet. Als Maschinenparameter 74 sind im gezeigten Ausführungsbeispiel eine Frästiefe 74.1, ein Verschleiß 74.2, ein Vorschub 74.3, ein Betriebsstoffverbrauch 74.4 und eine Fräswalzendrehzahl 74.5 vorgesehen. Es können alternativ weitere, von den Materialeigenschaften der zu fräsenden Straße 20 beeinflusste Maschinenparameter 74 vorgesehen sein, beispielsweise ein auf die Fräswalze übertragenes Drehmoment, oder es kann nur ein Teil der gezeigten oder ein einzelner Maschinenparameter 74 verwendet sein.

Bei der Durchführung einer Fräsarbeit sind die von einer Bedienperson vorgegebenen und die daraus resultierenden Maschinenparameter 74 einer verwendeten Straßenfräsmaschine 20 abhängig von den Materialeigenschaften der zu fräsenden Straße 20. So wird bei einer vergleichsweise harten Straße 20 ein höheres auf die Fräswalze übertragenes Drehmoment erforderlich sein, um bei einer vorgegebenen Frästiefe 74.1 und einem vorgegebenen Vorschub 74.3 eine vorgegebene Fräswalzendrehzahl 74.5 zu erreichen, als bei einer weniger harten Straße 20. Aus den in dem Block Erfassung Fräsparameter 75 zusammengefassten Maschinenparametern 74 können so im zweiten Block Materialeigenschaften 73.2 die Materialeigenschaften der gefräßten Straße 20 ermittelt werden. Die Maschinenparameter 74 können direkt von der Straßenfräsmaschine 10 auf das Planungssystem 30 übertragen werden. Alternativ dazu können die Maschinenparameter 74 in dem Block manuelle Eingabe 72, beispielsweise über die in Figur 3 gezeigte Eingabeeinheit 34, eingegeben werden.

Sowohl über die Datenerfassung während des Einbauprozesses einer Straße 20 als auch durch die Datenerfassung während erster Fräsarbeiten an der Straße 20 können somit die erforderlichen Materialeigenschaften bzw. damit korrelierende Kennwerte 40 erfasst und zugehörigen Arbeitsgebieten zugeordnet werden. Diese Daten können in dem Speicher 31 gespeichert und für den späteren Planungsprozess verwendet werden.

Ebenfalls denkbar ist es, die benötigten Materialeigenschaften über eine oder mehrere Messungen an der Straße 20 oder dem Straßenabschnitt zu erfassen. Die Materialeigenschaften und die zugehörigen Positionsdaten können in allen Fällen manuell oder automatisch erfasst und manuell oder automatisch in das Planungssystem 30 übertragen werden. Auch ist es möglich, dass Positionsdaten automatisch erfasst werden und ein Bediener manuell eingibt, für welchen räumlich begrenzten Bereich um die erfassten Positionsdaten die Materialeigenschaften oder die Kennwerte zutreffend sind.

Das Planungssystem 30 und das zu Grunde liegende Planungsverfahren ermöglichen eine genaue Prognose künftiger Straßenfräsarbeiten zumindest hinsichtlich der zu erwartenden Fräsleistung bzw. dem zu erwartenden Verschleiß. Dabei geht die Prognose vorzugsweise von korrekt eingestellten Maschinenparametern 74 während des Fräsvorgangs aus. Die Kenntnis dieser Daten ermöglicht eine optimierte Arbeitsorganisation und Baustellenabwicklung. Das Planungssystem 30 kann zentral angeordnet oder lokal an einer Straßenfräsmaschine 10 vorgesehen sein.

## Patentansprüche

1. Steuereinrichtung zum Betrieb einer oder mehrerer Straßenfräsmaschinen (10), wobei die Steuereinrichtung so konfiguriert ist, dass sie wenigstens die folgenden Schritte ausführt:
- Erfassung und Speicherung von Materialeigenschaften von Straßen (20) und/oder Straßenabschnitten und/oder von mit den Materialeigenschaften korrelierenden Kennwerten (40) zusammen mit jeweils zugehörigen geografischen Koordinaten;
- Erfassung von zumindest zweier durch Fräsen zu bearbeitenden Straßen (20) und/oder zu bearbeitenden Straßenabschnitten;
- Ermittlung von zumindest einer Fräsleistung der Straßenfräsmaschine (10) für die zu bearbeitenden Straßen (20) und/oder die zu bearbeitenden Straßenabschnitte auf Basis der für die Straßen (20) oder die Straßenabschnitte bestimmten Materialeigenschaften und/oder Kennwerte (40);
**dadurch gekennzeichnet,**
**dass** die Steuereinrichtung so konfiguriert ist, dass sie den folgenden Schritt ausführt:
- Ermittlung und Ausgabe einer bezüglich zumindest der Fräsleistung und/oder des Verschleißes (74.2) optimierten Abfolge verschiedener Fräsabschnitte innerhalb einer Baustelle oder verschiedener Straßenfräsarbeiten an verschiedenen Baustellen.

2. Steuereinrichtung nach Anspruch 1,
wobei die Steuereinrichtung so konfiguriert ist, dass sie für die Durchführung einer vorgegebenen Straßenfräsarbeit eine Arbeitsdauer und/oder einen Betriebsstoffverbrauch und/oder eine Menge erforderlicher Verschleißteile und/oder eine Menge erforderlicher Betriebsstoffe und/oder eine Menge erforderlicher Betriebshilfsstoffe an Hand der einer zu bearbeitenden Straße (20) oder einem zu bearbeitenden Straßenabschnitt zugeordneten Materialeigenschaften und/oder Kennwerte (40) bestimmt und anzeigt und/oder bei der Ermittlung der Abfolge der durchzuführenden Straßenfräsarbeiten berücksichtigt.

3. Steuereinrichtung nach einem der Ansprüche 1 oder 2, wobei die Steuereinrichtung so konfiguriert ist, dass sie aus den Kennwerten (40) die Materialeigenschaften für eine Straße (20) oder einen Straßenabschnitt bestimmt.

4. Steuereinrichtung nach einem der Ansprüche 1 bis 3, wobei die Steuereinrichtung so konfiguriert ist, dass sie als Materialeigenschaft eine Abrasivität und/oder eine Härte und/oder einen Materialtyp und/oder eine Materialzusammensetzung und/oder eine Temperatur und/oder einen Schichtaufbau der Straße (20) oder des Straßenabschnittes bestimmt.

5. Steuereinrichtung nach einem der Ansprüche 1 bis 4, wobei die Steuereinrichtung so konfiguriert ist, dass sie als den mit den Materialeigenschaften korrelierenden Kennwert (40) zumindest einen sich für die Durchführung einer zu planenden Fräsaufgabe ergebenden Maschinenparameter (74) einer Straßenfräsmaschine (10) bestimmt.

6. Steuereinrichtung nach Anspruch 5, wobei die Steuereinrichtung so konfiguriert ist, dass sie als Maschinenparameter (74) eine Frästiefe und/oder einen Vorschub der Straßenfräsmaschine (10) und/oder eine Fräswalzendrehzahl einer Fräswalze (15) der Straßenfräsmaschine (10) und/oder ein auf die Fräswalze (15) übertragenes Drehmoment und/oder eine auf die Fräswalze (15) übertragene Antriebsleistung oder einen Betriebsstoffverbrauch bestimmt.

7. Steuereinrichtung nach Anspruch 5 oder 6, wobei die Steuereinrichtung so konfiguriert ist, dass sie bei der Bestimmung der Materialeigenschaften aus der Maschinenparametern (74) einen beim Fräsen einer bestimmten Fläche aufgetretenen Verschleiß (74.2) zumindest eines Werkzeugs der Straßenfräsmaschine (10) berücksichtigt.

8. Steuereinrichtung nach einem der Ansprüche 1 bis 7, wobei die Steuereinrichtung so konfiguriert ist, dass sie Positionsdaten einer Straßenfräsmaschine (10) erfasst und den bestimmten Materialeigenschaften und/oder Kennwerten (40) zuordnet.

9. Steuereinrichtung nach einem der Ansprüche 1 bis 8, wobei die Steuereinrichtung so konfiguriert ist, dass sie die Materialeigenschaften und/oder die mit den Materialeigenschaften korrelierenden Kennwerte (40) aus dem Einbauprozess der Straße (20) oder des Straßenabschnitts bestimmt.

10. Steuereinrichtung nach einem der Ansprüche 1 bis 9, wobei die Steuereinrichtung so konfiguriert ist, dass sie als mit den Materialeigenschaften korrelierende Kennwerte (40) mit einem Messsystem ermittelte Messdaten bestimmt.

11. Steuereinrichtung nach einem der Ansprüche 1 bis 10, wobei die Steuereinrichtung so konfiguriert ist, dass sie bei der Vorgabe der Abfolge der Straßenfräsarbeiten Transportzeiten der Straßenfräsmaschine (10) zwischen den zu bearbeitenden Straßen (20) und/oder Straßenabschnitten und/oder Wartungsintervalle der Straßenfräsmaschine (10) berücksichtigt.

12. Steuereinrichtung nach einem der Ansprüche 1 bis 11, wobei die Steuereinrichtung so konfiguriert ist, dass sie als Fräsleistung eine gefräste Fläche und/oder ein Fräsvolumen und/oder eine Fräsmasse und/oder eine Frässtrecke jeweils bezogen auf eine Zeiteinheit bestimmt.

## Claims

1. A control device for operating one or more road milling machines (10), wherein the control device is adapted to perform at least the following steps:
- capturing and storing material properties of roads (20) and/or road segments, and/or characteristic values (40) correlating with the material properties, together with respectively pertinent geographic coordinates;
- capturing at least two roads (20) and/or road segments to be processed by milling;
- ascertaining, on the basis of the material properties and/or characteristic values (40) determined for the roads (20) or road segments, at least one milling output of the road milling machine (10) for the roads (20) and/or road segments to be processed,
**characterized in that** the control device is adapted to perform the following step:
- ascertaining and outputting a sequence of different milling segments within a construction site or of different road milling tasks at different construction sites which is optimized at least in terms of the milling output and/or wear (74.2).

2. The control device according to Claim 1, wherein the control device is adapted to determine and to display, and/or to take into consideration in ascertaining the sequence of the road milling tasks to be carried out a working time span and/or an operating supplies consumption and/or a quantity of required consumable parts and/or a quantity of required operating supplies and/or a quantity of required operating auxiliaries for carrying out a specified road milling task on the basis of the material properties and/or characteristic values (40) associated with a road (20) or road segment to be processed..

3. The control device according to one of Claims 1 or 2, wherein the control device is adapted to determine the material properties for a road (20) or road segment from the characteristic values (40).

4. The control device according to one of Claims 1 to 3, wherein the control device is adapted to determine an abrasiveness and/or a hardness and/or a material type and/or a material composition and/or a temperature and/or a layer structure of the road (20) or road segment as a material property.

5. The control device according to one of Claims 1 to 4, wherein the control device is adapted to determine at least one machine parameter (74) of a road milling machine (10) which is obtained for execution of a milling task to be planned as the characteristic value (40) correlating with the material properties.

6. The control device according to Claim 5, wherein the control device is adapted to determine a milling depth and/or an advance of the road milling machine (10) and/or a milling drum rotation speed of a milling drum (15) of the road milling machine (10) and/or a torque transferred to the milling drum (15) and/or a drive power transferred to the milling drum (15) or an operating supplies consumption as machine parameter (74).

7. The control device according to Claim 5 or 6, wherein the control device is adapted to take a wear (74.2) that has occurred on at least one tool of the road milling machine (10) in the context of milling a specific area into consideration in determining the material properties from the machine parameters (74).

8. The control device according to one of Claims 1 to 7, wherein the control device is adapted to capture position data of a road milling machine (10) and to associate them with the determined material properties and/or characteristic values (40).

9. The control device according to one of Claims 1 to 8, wherein the control device is adapted to determine the material properties and/or the characteristic values (40) correlating with the material properties from the process of installing the road (20) or road segment.

10. The control device according to one of Claims 1 to 9, wherein the control device is adapted to determine measured data ascertained with a measurement system as characteristic values (40) correlating with the material properties.

11. The control device according to one of Claims 1 to 10, wherein the control device is adapted to take transport times of the road milling machine (10) between the roads (20) and/or road segments to be processed, and/or maintenance intervals of the road milling machine (10) into consideration in the specification of the sequence of road milling tasks.

12. The control device according to one of Claims 1 to 11, wherein the control device is adapted to determine a milled area and/or a milled volume and/or a milled mass and/or a milled distance, referred in each case to a time unit, as a milling output.

## Revendications

1. Dispositif de commande pour faire fonctionner une ou plusieurs fraiseuses routières (10), le dispositif de commande étant configuré pour exécuter au moins les étapes suivantes :
- détection et stockage des valeurs caractéristiques du matériau des routes (20) et/ou des sections de route et/ou des valeurs caractéristiques (40) en corrélation avec les caractéristiques du matériau, conjointement avec les coordonnées géographiques respectives associées ;
- détection d'au moins deux routes (20) à traiter par fraisage et/ou sections de route à traiter ;
- détermination d'au moins un rendement de fraisage de la fraiseuse routière (10) pour les routes (20) à traiter et/ou les sections de route à traiter sur la base des caractéristiques de matériau et/ou des valeurs caractéristiques (40) déterminées pour les routes (20) ou les sections de route ;
**caractérisé en ce que** le dispositif de commande est configuré pour exécuter l'étape suivante :
- détermination et sortie d'une séquence optimisée par rapport au moins au rendement de fraisage et/ou à l'usure (74.2) de différentes sections de fraisage au sein d'un chantier ou de différents travaux de fraisage de route sur différents chantiers.

2. Dispositif de commande selon la revendication 1, le dispositif de commande étant configuré pour déterminer et afficher, pour l'exécution d'un travail de fraisage de route donné, une durée de travail et/ou une consommation de consommables et/ou une quantité de pièces d'usure nécessaires et/ou une quantité de consommables nécessaires et/ou une quantité d'auxiliaires de fonctionnement nécessaires, à partir des caractéristiques de matériau et/ou des valeurs caractéristiques (40) associées à une route (20) ou à une section de route à traiter et/ou pour en tenir compte lors de la détermination de la séquence des travaux de fraisage de route à effectuer.

3. Dispositif de commande selon l'une des revendications 1 ou 2, le dispositif de commande étant configuré pour déterminer, à partir des valeurs caractéristiques (40), les caractéristiques de matériau associées à une route (20) ou à une section de route.

4. Dispositif de commande selon l'une des revendications 1 à 3, le dispositif de commande étant configuré pour déterminer en tant que caractéristique du matériau une abrasivité et/ou une dureté et/ou un type de matériau et/ou une composition de matériau et/ou une température et/ou une structure de couche de la route (20) ou de la section de route.

5. Dispositif de commande selon l'une des revendications 1 à 4, le dispositif de commande étant configuré pour déterminer, en tant que valeur caractéristique (40) en corrélation avec les caractéristiques du matériau, au moins un paramètre machine (74) d'une fraiseuse routière (10) résultant de la réalisation d'une tâche de fraisage à planifier.

6. Dispositif de commande selon la revendication 5, le dispositif de commande étant configuré pour déterminer comme paramètre machine (74) une profondeur de fraisage et/ou une avance de la fraiseuse routière (10) et/ou une vitesse de rotation d'un tambour de fraisage (15) de la fraiseuse routière (10) et/ou un couple transmis au tambour de fraisage (15) et/ou une puissance d'entraînement transmise au tambour de fraisage (15) ou une consommation de carburant.

7. Dispositif de commande selon la revendication 5 ou 6, le dispositif de commande étant configuré pour tenir compte, lors de la détermination des caractéristiques de matériau à partir des paramètres machine (74), d'une usure (74.2) d'au moins un outil de la fraiseuse routière (10) survenue lors du fraisage d'une surface déterm inée.

8. Dispositif de commande selon l'une des revendications 1 à 7, le dispositif de commande étant configuré pour acquérir des données de position d'une fraiseuse routière (10) et les associer aux caractéristiques de matériau et/ou aux valeurs caractéristiques (40) déterminées.

9. Dispositif de commande selon l'une des revendications 1 à 8, le dispositif de commande étant configuré pour déterminer les caractéristiques de matériau et/ou les valeurs caractéristiques (40) en corrélation avec les caractéristiques de matériau à partir du processus de pose de la route (20) ou de la section de route.

10. Dispositif de commande selon l'une des revendications 1 à 9, le dispositif de commande étant configuré pour déterminer, en tant que valeurs caractéristiques (40) en corrélation avec les caractéristiques de matériau, des données de mesure déterminées par un système de mesure.

11. Dispositif de commande selon l'une des revendications 1 à 10, le dispositif de commande étant configuré pour prendre en compte, lors de la prescription de la séquence des travaux de fraisage de route, des temps de transport de la fraiseuse routière (10) entre les routes (20) à traiter et/ou des sections de route et/ou des intervalles de maintenance de la fraiseuse routière (10).

12. Dispositif de commande selon l'une des revendications 1 à 11, le dispositif de commande étant configuré pour déterminer comme rendement de fraisage une surface fraisée et/ou un volume fraisé et/ou une masse fraisée et/ou une distance fraisée respectivement rapportés à une unité de temps.
